(19) Europäisches Patentamt
European Patent Office
Office européen des brevets

(11) **EP 1 083 792 B1**

(12) **EUROPÄISCHE PATENTSCHRIFT**

(45) Veröffentlichungstag und Bekanntmachung des Hinweises auf die Patenterteilung:
**24.09.2003 Patentblatt 2003/39**

(21) Anmeldenummer: **99920748.3**

(22) Anmeldetag: **23.04.1999**

(51) Int Cl.$^7$: **A01N 47/24**, A01N 37/50, A01N 47/12, A01N 47/18 // (A01N47/24, 47:18), A01N47:12,(A01N37/50, 47:18), A01N47:12,(A01N47/18, 47:24), A01N37:50,(A01N47/12, 47:24), A01N37:50

(86) Internationale Anmeldenummer:
**PCT/EP99/02729**

(87) Internationale Veröffentlichungsnummer:
**WO 99/056551 (11.11.1999 Gazette 1999/45)**

(54) **FUNGIZIDE MISCHUNGEN**

FUNGICIDAL MIXTURES

MELANGES FONGICIDES

(84) Benannte Vertragsstaaten:
**AT BE CH DE DK ES FR GB GR IE IT LI NL PT SE**
Benannte Erstreckungsstaaten:
**SI**

(30) Priorität: **04.05.1998 DE 19819628**

(43) Veröffentlichungstag der Anmeldung:
**21.03.2001 Patentblatt 2001/12**

(73) Patentinhaber: **BASF AKTIENGESELLSCHAFT
67056 Ludwigshafen (DE)**

(72) Erfinder:
- **SCHELBERGER, Klaus
D-67161 Gönnheim (DE)**
- **SCHERER, Maria
D-76829 Landau (DE)**
- **SAUR, Reinhold
D-67459 Böhl-Iggelheim (DE)**
- **EICKEN, Karl
D-67157 Wachenheim (DE)**
- **SAUTER, Hubert
D-68305 Mannheim (DE)**
- **AMMERMANN, Eberhard
D-64646 Heppenheim (DE)**
- **GROTE, Thomas
D-67105 Schifferstadt (DE)**
- **LORENZ, Gisela
D-67434 Neustadt (DE)**
- **STRATHMANN, Siegfried
D-67117 Limburgerhof (DE)**

(56) Entgegenhaltungen:
**EP-A- 0 775 696** **WO-A-97/40688**
**WO-A-98/08386** **DE-A- 4 321 897**

Bemerkungen:
Die Akte enthält technische Angaben, die nach dem Eingang der Anmeldung eingereicht wurden und die nicht in dieser Patentschrift enthalten sind.

**EP 1 083 792 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft fungizide Mischungen, welche mindestens eine Verbindung, ausgewählt aus

$a_1$) Carbamaten der Formel I,

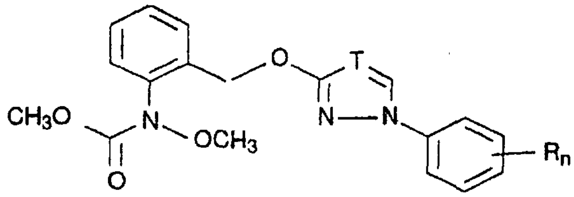

(I)

in der T CH oder N bedeutet, n für 0, 1 oder 2 steht und R Halogen, $C_1$-$C_4$-Alkyl oder $C_1$-$C_4$-Halogenalkyl bedeutet, wobei die Reste R verschieden sein können, wenn n für 2 steht,

$a_2$) dem Oximethercarbonsäureester der Formel II

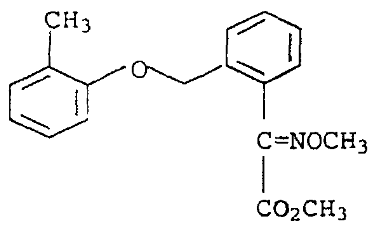

(II)

oder

$a_3$) dem Oximethercarbonsaureamid der Formel III,

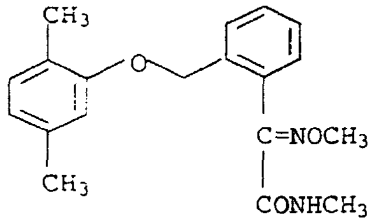

(III)

und

b) mindestens einen Wirkstoff der Formel IV,

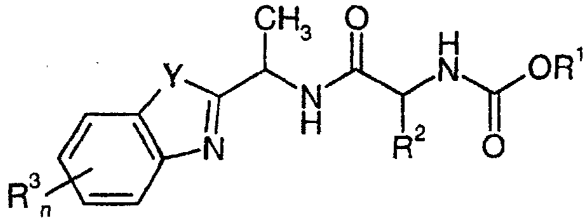

(IV)

wobei die Substituenten $R^1$ bis $R^3$ folgende Bedeutung haben:

$R^1$ $C_1$-$C_4$-Alkyl, $C_2$-$C_4$-Alkenyl, $C_2$-$C_4$-Alkinyl, $C_1$-$C_4$-Alkyl-$C_3$-$C_7$-Cycloalkyl, wobei diese Reste Substituenten ausgewählt aus Halogen, Cyano, und $C_1$-$C_4$-Alkoxy tragen können, sowie $C_1$-$C_4$-Alkoxy

$R^2$ $C_1$-$C_4$-Alkyl oder $C_1$-$C_4$-Halogenalkyl,

$R^3$ Wasserstoff, Halogen, $C_1$-$C_4$-Alkyl, $C_1$-$C_4$-Alkoxy, $C_1$-$C_4$-Alkylthio, N-$C_1$-$C_4$-Alkylamino, $C_1$-$C_4$-Halogenalkyl oder $C_1$-$C_4$-Halogenalkoxy

Y O, S, $CHR^4$ oder $NR^5$, wobei $R^4$ und $R^5$ die für $R^2$ genannten Bedeutungen haben kann,

n den Wert 0, 1, 2 oder 3 hat,

in einer synergistisch wirksamen Menge.

Außerdem betrifft die Erfindung Verfahren zur Bekämpfung von Schadpilzen mit Mischungen der Verbindungen I, II und/oder III und IV und die Verwendung der Verbindungen I, II und/oder III und IV zur Herstellung derartiger Mischungen.

Die Verbindungen der Formel I, ihre Herstellung und ihre Wirkung gegen Schadpilze sind aus der Literatur bekannt (WO-A 96/01,256 und 96/01,258).

Die Verbindungen der Formeln II und III, ihre Herstellung und ihre Wirkung gegen Schadpilze ist aus der Literatur bekannt (EP-A 253 213, EP-A 398 692 und EP-A 477631).

Die Verbindungen der Formel IV sowie Verfahren zu deren Herstellung sind in der DE-A-43 21 897, EP-A-0 775 696 und der JP-A 09/323984 beschrieben. Außerdem können sie analog den in der DE 1 95 31 814 beschriebenen Verfahren hergestellt werden.

Aus der WO 98/08386 sind Mittel bekannt, die Verbindungen der Formel I und Valinamide mit aromatischer Substitution enthalten.

Im Hinblick auf eine Senkung der Aufwandmengen und eine Verbesserung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilze zeigen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen I und/oder II und/oder III und IV oder bei Anwendung der Verbindungen I und/oder II und/oder III und IV nacheinander Schadpilze besser bekämpfen lassen als mit den Einzelverbindungen.

Die Formel I repräsentiert insbesondere Carbamate, in denen die Kombination der Substituenten einer Zeile der folgenden Tabelle entspricht:

Tabelle 1:

| Nr. | T | $R_n$ |
|---|---|---|
| I.1 | N | 2-F |
| I.2 | N | 3-F |
| I.3 | N | 4-F |
| I.4 | N | 2-Cl |
| I.5 | N | 3-Cl |
| I.6 | N | 4-Cl |
| I.7 | N | 2-Br |
| I.8 | N | 3-Br |
| I.9 | N | 4-Br |
| I.10 | N | 2-$CH_3$ |
| I.11 | N | 3-$CH_3$ |
| I.12 | N | 4-$CH_3$ |
| I.13 | N | 2-$CH_2CH_3$ |

Tabelle 1: (fortgesetzt)

| Nr. | T | $R_n$ |
|---|---|---|
| I.14 | N | $3\text{-}CH_2CH_3$ |
| I.15 | N | $4\text{-}CH_2CH_3$ |
| I.16 | N | $2\text{-}CH(CH_3)_2$ |
| I.17 | N | $3\text{-}CH(CH_3)_2$ |
| I.18 | N | $4\text{-}CH(CH_3)_2$ |
| I.19 | N | $2\text{-}CF_3$ |
| I.20 | N | $3\text{-}CF_3$ |
| I.21 | N | $4\text{-}CF_3$ |
| I.22 | N | $2,4\text{-}F_2$ |
| I.23 | N | $2,4\text{-}Cl_2$ |
| I.24 | N | $3,4\text{-}Cl_2$ |
| I.25 | N | $2\text{-}Cl, 4\text{-}CH_3$ |
| I.26 | N | $3\text{-}Cl, 4\text{-}CH_3$ |
| I.27 | CH | 2-F |
| I.28 | CH | 3-F |
| I.29 | CH | 4-F |
| I.30 | CH | 2-Cl |
| I.31 | CH | 3-Cl |
| I.32 | CH | 4-Cl |
| I.33 | CH | 2-Br |
| I.34 | CH | 3-Br |
| I.35 | CH | 4-Br |
| I.36 | CH | $2\text{-}CH_3$ |
| I.37 | CH | $3\text{-}CH_3$ |
| I.38 | CH | $4\text{-}CH_3$ |
| I.39 | CH | $2\text{-}CH_2CH_3$ |
| I.40 | CH | $3\text{-}CH_2CH_3$ |
| I.41 | CH | $4\text{-}CH_2CH_3$ |
| I.42 | CH | $2\text{-}CH(CH_3)_2$ |
| I.43 | CH | $3\text{-}CH(CH_3)_2$ |
| I.44 | CH | $4\text{-}CH(CH_3)_2$ |
| I.45 | CH | $2\text{-}CF_3$ |
| I.46 | CH | $3\text{-}CF_3$ |
| I.47 | CH | $4\text{-}CF_3$ |
| I.48 | CH | $2,4\text{-}F_2$ |

(fortgesetzt)

| | | |
|---|---|---|
| I.49 | CH | 2,4-$Cl_2$ |
| I-50 | CH | 3,4-$Cl_2$ |
| I.51 | CH | 2-Cl, 4-$CH_3$ |
| I.52 | CH | 3-Cl, 4-$CH_3$ |

Besonders bevorzugt werden die Verbindungen I.12, I.23, I.32 und I.38.

Die Verbindungen der Formel I bis III können in Bezug auf die C=Y- bzw. C=CH- oder C=N-Doppelbindungen in der E- oder der Z-Konfiguration (in Bezug auf die Carbonsäurefunktion) vorliegen. Demgemäß können sie in der erfindungsgemäßen Mischung jeweils entweder als reine E- oder Z-Isomere oder als E/Z-Isomerenmischung Verwendung finden. Bevorzugt findet die E/Z-Isomerenmischung oder das Z-Isomer Anwendung, wobei das Z-Isomere besonders bevorzugt ist.

Die C=N-Doppelbindungen der Oximethergruppierungen in der Seitenkette der Verbindungen I bis III können jeweils als reine E- oder Z-Isomere oder als E/Z-Isomerengemische vorliegen. Die Verbindungen I bis III können sowohl als Isomerengemische als auch als reine Isomere in den erfindungsgemäßen Mischungen verwendet werden. Im Hinblick auf ihre Verwendung werden insbesondere Verbindungen I bis III bevorzugt, in denen die endständige Oximethergruppierung der Seitenkette in der cis-Konfiguration vorliegt ($OCH_3$ zu ZR').

Die Verbindungen I bis III sind wegen ihres basischen Charakters in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure, Kohlensäure und Salpetersäure.

Als organische Säuren kommen beispielsweise Ameisensäure, und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkylbzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc., in Betracht.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Unter den Verbindungen der Formel IV sind solche bevorzugt, bei denen $R^1$ $C_1$-$C_4$-Alkyl (Methyl, Ethyl, n- und i-Propyl und t-Butyl), $C_1$-$C_4$-Alkylen-$C_3$-$C_7$-Cycloalkyl, $C_1$-$C_4$-Alkenyl (insbesondere Ethenyl, Propenyl und Butenyl, die insbesondere mit Halogen (vorzugsweise C1) substituiert sein können), Propinyl, Cyanomethyl und Methoxymethyl ist. Unter den $C_1$-$C_4$-Alkylen-$C_3$-$C_7$-Cycloalkylsubstituenten sind insbesondere methylensubstituierte Verbindungen, insbesondere Methylencyclopropyl, Methylencyclopentyl, Methylencyclohexyl und Methylencyclohexenyl bevorzugt. Die Ringe in diesen Substituenten können vorzugsweise mit Halogen substituiert sein. Besonders bevorzugt ist i-Propyl.

Als Substituent $R^2$ ist $C_1$-$C_4$-Alkyl (insbesondere Methyl, Ethyl, i-Propyl oder n- i- oder t-Butyl)) bevorzugt. Besonders bevorzugt ist i-Propyl.

Bevorzugte Substituenten $R^3$ und $R^4$ sind Wasserstoff, F, Cl, Methyl, Ethyl, Methoxy, Thiomezhyl und N-Methylamino, insbesondere F oder Cl.

Bevorzugte Verbindungen der Formel IV sind der bereits erwähnten JP A 09/329384 zu entnehmen. Besonders bevorzugt ist die Verbindung der Formel IV/1.

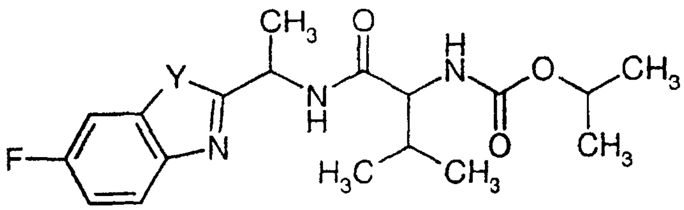

(IV/1)

Bevorzugt setzt man bei der Bereitstellung der Mischungen die reinen Wirkstoffe I, II und/oder III und IV ein, denen man je nach Bedarf weitere Wirkstoffe gegen Schadpilze oder andere Schädlinge wie Insekzen, Spinntiere oder Nematoden, oder auch herbizide oder wachstumsregulierende Wirkstoffe oder Düngemittel beimischen kann.

Die Mischungen der Verbindungen I, II und/oder III und IV bzw. die gleichzeitige gemeinsame oder getrennte Verwendung der Verbindungen I, II und/oder III und IV zeichnen sich durch eine hervorragende Wirkung gegen ein breites Spektrum von pflanzenpathogenen Pilzen, insbesondere aus der Klasse der Ascomyceten, Deuteromyceten, Phycomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinerea (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Pseudoperonospora-Arten an Kürbisgewächsen und Hopfen, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variotii.

Die Verbindungen I, II und/oder III und IV können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I, II und/oder III und IV werden üblicherweise in einem Gewichtsverhältnis von 0.01:1 bis 1:1, vorzugsweise 0.03:1 bis 0.5:1, insbesondere 0.05:1 bis 0,5:1 (IV:I, II und/oder III) angewandt.

Die Aufwandmengen der erfindungsgemäßen Mischungen liegen je nach Art des gewünschten Effekts für die Verbindungen I, II und/oder III bei 0.005 bis 0.5 kg/ha, vorzugsweise 0.05 bis 0.5 kg/ha, insbesondere 0.05 bis 0.2 kg/ha.

Die Aufwandmengen für die Verbindungen IV liegen entsprechend in der Regel bei 0.001 bis 0.5 kg/ha, vorzugsweise 0.001 bis 0.1 kg/ha, insbesondere 0.005 bis 0.05 kg/ha.

Bei der Saatgutbehandlung werden im allgemeinen Aufwandmengen an Mischung von 0,001 bis 100 g/kg Saatgut, vorzugsweise 0,01 bis 50 g/kg, insbesondere 0,01 bis 10 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I, II und/oder III und IV durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I, II und/oder III und IV können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren,

z.B. Lignin-, Phenol-, Naphthalin- und Dibutylnaphthalinsulfonsäure, sowie von Fettsäuren, Alkyl- und Alkylarylsulfonaten, Alkyl-, Lauryletherund Fettalkoholsufaten, sowie Salze sulfatierter Hexa-, Heptaund Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxy-ethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglyco-letheracetat, Sorbitester, Lignin-Sulfitablaugen oder Methylcellulose in Betracht.

Pulver, Streu- und Stäubemittel können durch Mischen oder gemeinsames Vermahlen der Verbindungen I und II oder III oder IV oder der Mischung aus den Verbindungen I und II, III oder IV mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit. Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I, II, III und/oder IV bzw. der Mischung aus den Verbindungen I, II und/oder III und IV. Die Wirkstoffe werden dabei in einer Reinheit von 90 % bis 100 %, vorzugsweise 95 % bis 100% (nach NMR- oder HPLC-Spektrum) eingesetzt.

Die Verbindungen I, II und/oder III oder IV bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I, II und/oder III und IV bei getrennter Ausbringung, behandelt. Die Anwendung kann vor oder nach dem Befall durch die Schadpilze erfolgen.

Die fungizide Wirkung der Verbindung und der Mischungen läßt sich durch folgende Versuche zeigen:

Die Wirkstoffe werden getrennt oder gemeinsam als 10 %ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis ethoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen. Colby Formel:

$$E = x + y + z - x \cdot y \cdot z/100$$

E zu erwartender Wirkungsgrad, ausgedrückt in % der unbehandelten Kontrolle, beim Einsatz der Mischung aus den Wirkstoffen A, B und C in den Konzentrationen a, b und c

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

z der Wirkungsgrad, ausgedrückt in % der unbehandelten Kontrolle, beim Einsatz des Wirkstoffs C in der Konzentration c

Der Wirkungsgrad (W) wird nach der Formel von Abbot wie folgt berechnet:

$$W = (1 - \alpha) \bullet 100/\beta$$

$\alpha$ entspricht dem Pilzbefall der behandelten Pflanzen in % und

β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Anwendungsbeispiel 1 - Wirksamkeit gegen Phytophthora infestans an Tomaten

Blätter von Topfpflanzen der Sorte "Große Fleischtomate" wurden mit einer wäßrigen Suspension, die aus einer Stammlösung aus 10 % Wirkstoff, 63 % Cyclohexanon und 27 % Emulgiermittel angesetzt wurde, bis zur Tropfnässe besprüht. Am folgenden Tag wurden die Blätter mit einer wäßrigen zoosporenaufschwemmung von Phytophthora infestans infiziert. Anschließend wurden die Pflanzen in einer wasserdampfgesättigten Kammer bei Temperaturen zwischen 16 und 18°C aufgestellt. Nach 6 Tagen hatte sich die Krautfäule auf den unbehandelten, jedoch infizierten Kontrollpflanzen so stark entwickelt, daß der Befall visuell in % ermittelt werden konnte.

Die visuell ermittelten Werte für den Prozentanteil befallener Blattflächen wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Die Ergebnisse der Versuche sind den nachstehenden Tabellen 2 und 3 zu entnehmen.

Tabelle 2 :

| Vergleichsversuche | | | |
|---|---|---|---|
| Bsp. | Wirkstoff | Konz. in Spritzbrühe in ppm | Wirkungsgrad in % der unbeh. Kontrolle |
| 1V | Verbindung I. 32 aus Tab. 1 | 0,25 | 55 |
| | | 0,06 | 10 |
| 2V | Verbindung I.38 aus Tabelle 1 | 0,25 | 33 |
| | | 0,06 | 0 |
| 3V | Verbindung II | 0,06 | 10 |
| 4V | Verbindung III | 0,25 | 33 |
| | | 0,06 | 0 |
| 5V | Verbindung IV/1 | 0,06 | 21 |
| 6V | Kontrolle unbehandelt | 89 % Befall | 0 |

Tabelle 3 :

| Erfindungsgemäße Mischungen | | | |
|---|---|---|---|
| Bsp. | erfindungsgemäße Mischungen (Konz. in ppm) | beobachterter Wirkungsgrad | berechneter Wirkungsgrad* |
| 7 | 0,06 I.32 + 0,06 IV/1 | 78 | 29 |
| 8 | 0,25 I.32 + 0,06 IV/1 | 94 | 65 |
| 9 | 0,06 I.38 + 0,06 IV/1 | 83 | 21 |
| 10 | 0,25 I.38 + 0,06 IV/1 | 94 | 47 |
| 11 | 0,25 II + 0,06 IV/1 | 78 | 29 |
| 12 | 0,06 III + 0,06 IV/1 | 83 | 21 |
| 13 | 0,25 III + 0,06 IV/1 | 83 | 47 |

* nach der Colby-Formel

Die Ergebnisse der Versuche zeigen, daß der beobachtete Wirkungsgrad in allen Fällen höher ist als der nach der Colby-Formel vorausberechnete Wirkungsgrad.

## Patentansprüche

1. Fungizide Mischung, enthaltend mindestens eine Verbindung ausgewählt aus

a) Carbamaten der Formel I,

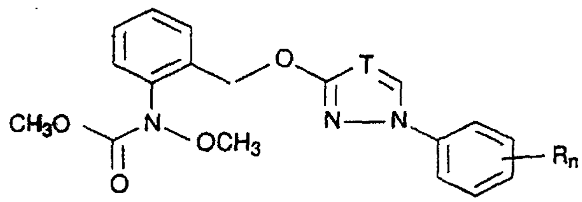

(I)

in der T CH oder N bedeutet, n für 0, 1 oder 2 steht und R Halogen, $C_1$-$C_4$-Alkyl oder $C_1$-$C_4$-Halogenalkyl bedeutet, wobei die Reste R verschieden sein können, wenn n für 2 steht,

$a_2$) dem Oximethercarbonsäureester der Formel II

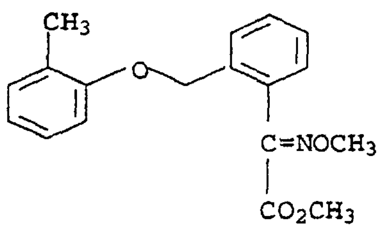

(II)

oder

$a_3$) dem Oximethercarbonsäureamid der Formel III,

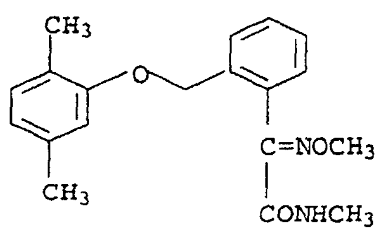

(III)

und

b) einer Verbindung der Formel IV

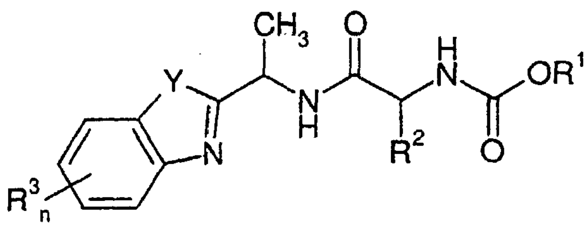

(IV)

wobei die Substituenten $R^1$ bis $R^3$ folgende Bedeutung haben:

$R^1$ $C_1$-$C_4$-Alkyl, $C_2$-$C_4$-Alkenyl, $C_2$-$C_4$-Alkinyl, $C_1$-$C_4$-Alkyl-$C_3$-$C_7$-Cycloalkyl, wobei diese Reste Substituenten ausgewählt aus Halogen, Cyano, und $C_1$-$C_4$-Alkoxy tragen können, sowie $C_1$-$C_4$-Alkoxy

$R^2$ $C_1$-$C_4$-Alkyl oder $C_1$-$C_4$-Halogenalkyl,

$R^3$ Wasserstoff, Halogen, $C_1$-$C_4$-Alkyl, $C_1$-$C_4$-Alkoxy, $C_1$-$C_4$-Alkylthio, N-$C_1$-$C_4$-Alkylamino, $C_1$-$C_4$-Halogenalkyl oder $C_1$-$C_4$-Halogenalkoxy

Y O, S, $CHR^4$ oder $NR^5$, wobei $R^4$ und $R^5$ die für $R^2$ genannten Bedeutungen haben kann,

n den Wert 0, 1, 2 oder 3 hat,

in einer synergistisch wirksamen Menge.

**2.** Fungizide Mischungen nach Anspruch 1, enthaltend'als Komponente b) die Verbindung der Formel IV/1

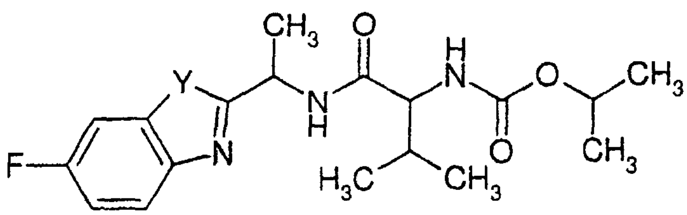

(IV/1)

**3.** Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit einer Verbindung der Formeln I, II oder III gemäß Anspruch 1 und mindestens einer Verbindung der Formel IV gemäß Anspruch 1 behandelt.

**4.** Verfahren nach Anspruch 2, **dadurch gekennzeichnet, daß** man die Schadpilze, deren Lebensraum oder die von ihnen freizuhaltenden Pflanzen, Samen, Böden, Flächen, Materialien oder Räume mit 0,005 bis 0,5 kg/ha mindestens einer Verbindung I, II und/oder III gemäß Anspruch 1 behandelt.

**5.** Verfahren nach Anspruch 2, **dadurch gekennzeichnet, daß** man die Schadpilze, deren Lebensraum oder die von ihnen freizuhaltenden Pflanzen, Samen, Böden, Flächen, Materialien oder Räume mit 0.001 bis 0.5 kg/ha einer Verbindung IV gemäß Anspruch 1 behandelt.

## Claims

**1.** A fungicidal mixture, comprising at least one compound selected from

$a_1$) carbamates of the formula I,

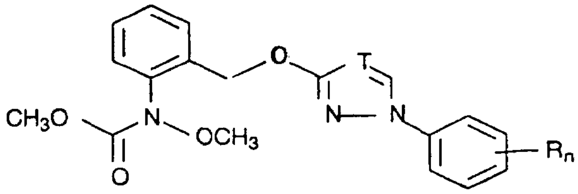

(I)

in which T is CH or N, n is 0, 1 or 2 and R is halogen, $C_1$-$C_4$-alkyl or $C_1$-$C_4$-haloalkyl, where the radicals R may be different if n is 2,

$a_2$) the oxime ether carboxylate of the formula II

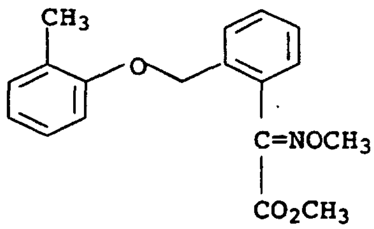

(II)

or

$a_3$) the oxime ether carboxamide of the formula III,

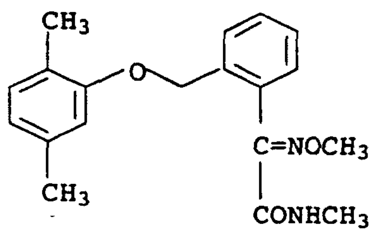

(III)

and

b) a compound of the formula IV

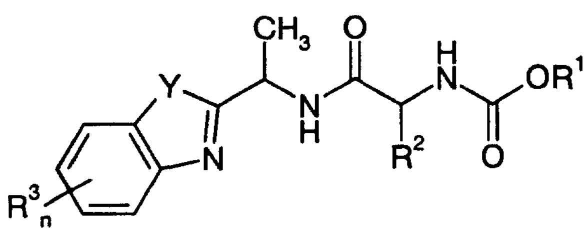

(IV)

where the substituents $R^1$ to $R^3$ have the following meaning:

$R^1$ is $C_1$-$C_4$-alkyl, $C_2$-$C_4$-alkenyl, $C_2$-$C_4$-alkynyl, $C_1$-$C_4$-alkyl$C_3$-$C_7$-cycloalkyl, where these radicals may carry substituents selected from the group consisting of halogen, cyano and $C_1$-$C_4$-alkoxy, and is also $C_1$-$C_4$-alkoxy,

$R^2$ is $C_1$-$C_4$-alkyl or $C_1$-$C_4$-haloalkyl,

$R^3$ is hydrogen, halogen, $C_1$-$C_4$-alkyl, $C_1$-$C_4$-alkoxy, $C_1$-$C_4$-alkylthio, N-$C_1$-$C_4$-alkylamino, $C_1$-$C_4$-haloalkyl or $C_1$-$C_4$-haloalkoxy,

Y is O, S, $CHR^4$ or $NR^5$, where $R^4$ and $R^5$ may each have the meanings mentioned for $R^2$,

n is 0, 1, 2 or 3,

in a synergistically effective amount.

**2.** A fungicidal mixture as claimed in claim 1, comprising as component b) the compound of the formula IV/1

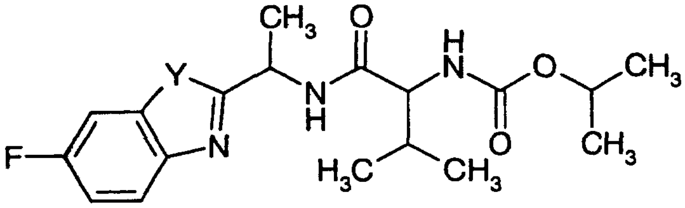

(IV/1)

**3.** A method for controlling harmful fungi, which comprises treating the harmful fungi, their habitat or the plants, **seeds, soils, areas, materials or spaces to be kept free from** them with a compound of the formula I, II or III as set forth in claim 1 and at least one compound of the formula IV as set forth in claim 1.

**4.** A method as claimed in claim 3, wherein the harmful fungi, their habitat or the plants, seeds, soils, areas, materials or spaces to be kept free from them are treated with from 0.005 to 0.5 kg/ha of at least one compound I, II and/or III as set forth in claim 1.

**5.** A method as claimed in claim 3, wherein the harmful fungi, their habitat or the plants, seeds, soils, areas, materials or spaces to be kept free from them are treated with from 0.001 to 0.5 kg/ha of a compound IV as set forth in claim 1.

## Revendications

**1.** Mélange fongicide contenant au moins un composé choisi parmi

a) les carbamates de formule I,

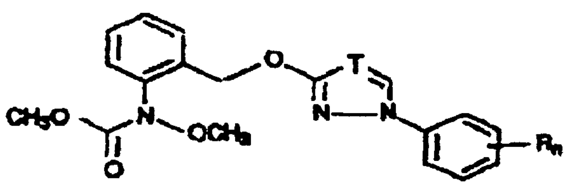

(I)

dans laquelle T représente CH ou N, n vaut 0, 1 ou 2 et R représente un halogène, un alkyle en $C_1$ à $C_4$ ou un halogénoalkyle en $C_1$ à $C_4$, ces radicaux R pouvant être différents lorsque n vaut 2,

a2) l'ester d'acide oximeéthercarboxylique de formule II

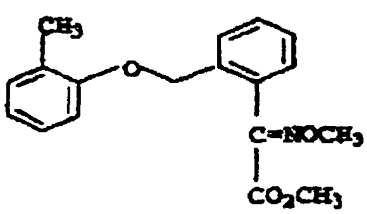

(II)

ou

a3) l'amide d'acide oximeéthercarboxylique de formule III

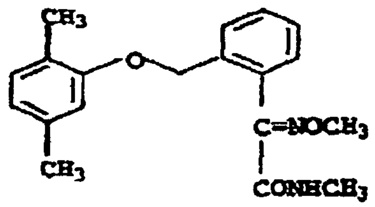

(III)

et

b) un composé de formule IV

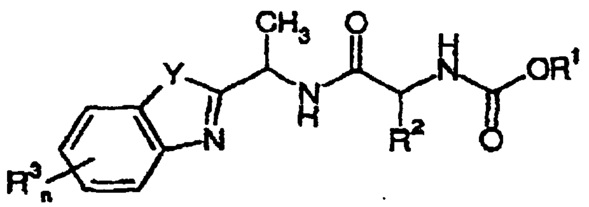

(IV)

où les substituants $R^1$ à $R^3$ ont la signification suivante:

$R^1$ représente un alkyle en $C_1$ à $C_4$, un alcényle en $C_2$ à $C_4$, un alcynyle en $C_2$ à $C_4$, un alkyle en $C_1$ à $C_4$-cycloalkyle en $C_3$ à C7, ces radicaux pouvant porter des substituants choisis parmi halogène, cyano et alcoxy en $C_1$ à $C_4$, ainsi qu'alcoxy en $C_1$ à $C_4$,
$R^2$ représente un alkyle en $C_1$ à $C_4$ ou un halogénoalkyle en $C_1$ à $C_4$;
$R^3$ représente un hydrogène, un halogène, un alkyle en $C_1$ à $C_4$, un alcoxy en $C_1$ à $C_4$, un alkylthio en $C_1$ à $C_4$, un N-alkylamino en $C_1$ à $C_4$, un halogénoalkyle en $C_1$ à $C_4$ ou un halogénoalcoxy en $C_1$ à $C_4$,
Y représente O, S, $CHR^4$ ou $NR^5$, où $R^4$ et $R^5$ peuvent avoir les significations mentionnées pour $R^2$,
n prend la valeur 0, 1, 2 ou 3,

en une quantité ayant une efficacité synergique.

2. Mélanges fongicides selon la revendication 1, contenant comme composant b) le composé de formule IV/1

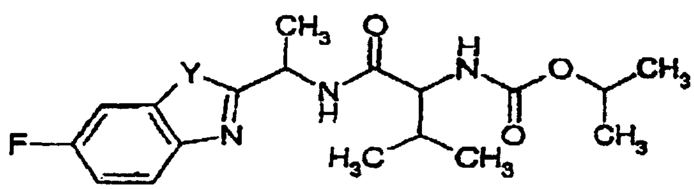

(IV/1)

3. Procédé de lutte contre les champignons nocifs, **caractérisé en ce qu'**on traite les champignons nocifs, leur habitat ou les plantes, graines, sols, surfaces, matériaux ou espaces qu'il s'agit d'en débarrasser, avec un composé de formule I, II ou III selon la revendication 1 et au moins un composé de formule IV selon la revendication 1.

4. Procédé selon la revendication 2, **caractérisé en ce qu'**on traite les champignons nocifs, leur habitat ou les plantes, graines, surfaces, matériaux ou espaces qu'il s'agit d'en débarrasser avec de 0,005 à 0,5 kg/hectare d'au moins un composé I, II et/ou III selon la revendication 1.

5. Procédé selon la revendication 2, **caractérisé en ce qu'**on traite les champignons nocifs, leur habitat ou les plantes, graines, sols, surfaces, matériaux ou espaces qu'il s'agit d'en débarrasser avec de 0,001 à 0,5 kg/hectare d'un composé IV selon la revendication 1.